# EUROPÄISCHE PATENTSCHRIFT

(11) **EP 4 069 930 B1**
(45) Veröffentlichungstag und Bekanntmachung des Hinweises auf die Patenterteilung: **15.03.2023**
(21) Anmeldenummer: 20717793.2
(22) Anmeldetag: 30.03.2020
(51) Int. Cl.: E06B 5/16, E06B 9/15, B60J 5/14, A62C 2/16

(54) **FEUERSCHUTZROLLTOR**
FIRE-PROTECTION ROLLING DOOR
PORTE ENROULABLE DE PROTECTION CONTRE L'INCENDIE

(43) Veröffentlichungstag der Anmeldung: 12.10.2022
(73) Patentinhaber: Effertz Tore GmbH, 41238 Mönchengladbach (DE)
(72) Erfinder: KUSTER, Felix, 40489 Düsseldorf (DE); KAHLE, Michael, 41169 Mönchengladbach (DE); SCHWENZER, Claus, 41239 Mönchengladbach (DE)
(74) Vertreter: Brinkmann & Partner
(86) Internationale Anmeldenummer: PCT/EP2020/058998
(87) Internationale Veröffentlichungsnummer: WO 2021/197571

(56) Entgegenhaltungen:
- AT-B- 355 784
- DE-B1- 2 901 400

## Beschreibung

Die vorliegende Erfindung betrifft ein Feuerschutzrolltor, bestehend aus einem Rolltorpanzer aus gelenkig miteinander verbundenen Profillamellen, einer bahnförmigen Zwischenlage aus feuer- und wärmedämmendem Material und sich überlappenden Decklamellen, der in beidseitigen Führungsschienen führbar im Öffnungszustand oberhalb einer im Brandfall zu verschließenden Öffnung gehalten ist.

Das Feuerschutzrolltor der gattungsgemäßen Art, beispielsweise bekannt aus der EP 0 367 883 A1, ist ein luftdicht und feuerhemmend ausgestaltetes Feuerschutzrolltor. In diesem Stand der Technik ist es kombiniert mit einer Schlupftür. Hierdurch ist es möglich, z.B. Lastkraftwagen, wie auch Busse oder PKWs in die Waggons jeweils von der Vorderseite oder Rückseite hereinfahren und ausfahren zu lassen und jeden Waggon nach seiner Beladung durch Herablassen der stirnseitigen Feuerschutzrolltore derart zu schließen, dass im Normalfall Personen noch durch die entsprechenden Schlupftüren den einen Waggon verlassen und zum anderen überschreiten können bzw. den Waggon auch wieder betreten können. Für den Alarmfall ist der sicherheitstechnisch erforderliche feuertechnische Abschluss gegeben und gleichzeitig die erforderliche Luftdichtigkeit gewährleistet. Im Brandfall ist es demzufolge möglich, bei personenfreiem Waggon einen luftdichten und durch die Feuerschutzrolltore nach außen feuergesicherten Raum herzustellen, in den ein Löschgas eingegeben werden kann. Gleichartige Problemstellungen ergeben sich heutzutage beispielsweise in der Ausrüstung von Fähr- und Kreuzfahrschiffen.

Ein gattungsgemäßes Feuerschutzrolltor besteht aus einem Rolltorpanzer aus gelenkig miteinander verbundenen scharnierartigen Profillamellen, einer bahnförmigen Zwischenlage aus feuer- und wärmedämmendem Material und sich überlappenden Decklamellen. Ein derartiges Tor ist in der Regel in beidseitigen Führungsschienen sowie einer Unter-Decken-Führung zur Halterung des Rolltorpanzers im Öffnungszustand horizontal unter einer Waggondecke gehalten und im Schließzustand durch eine Abdichtungseinrichtung luftdicht abgeschlossen gehalten. Ein gattungsgemäßes in beidseitigen Führungsschienen führbar im Öffnungszustand oberhalb einer im Brandfall zu verschließenden Öffnung gehaltenes Feuerschutzrolltor ist oberhalb der Öffnung aufgerollt oder horizontal angeordnet. Somit ist die Breite die Dimension quer zur zu verschließenden Öffnung, also die Horizontale. Diese Richtung entspricht den Angaben der unterschiedlichen Breiten der einzelnen Bauteile wie Decklamellen, Profillamellen, Zwischenlagen usw. Die Breite der Bauteile und damit des Rolltorpanzers wird beispielsweise durch den horizontalen Abstand der Führungsschienen bestimmt. Die offene Höhe einer zu verschließenden Öffnung, also die Vertikale, bestimmt die Dimension der Mindest-Höhe des Rolltorpanzers und damit der Höhe und der Anzahl der einzelnen Bauteile wie Decklamellen, Profillamellen usw.

Im Stand der Technik ist es bekannt, dass die Zwischenlage und die Decklamellen an den Profillamellen befestigt sind. Dabei sind die Befestigungen für die Zwischenlage und die Decklamellen als Haken, Nieten oder dgl. an den Profillamellen ausgebildet. Daraus ergibt sich der Nachteil, dass beide Seiten des Feuerschutzrolltores durch vergleichsweise lange und üblicherweise metallische Elemente auf einer in bestimmungsgemäßer Abdichtposition horizontalen Linie verbunden sind. Dies bedeutet erhebliche unerwünschte Wärmeübergänge. In der Praxis hat sich herausgestellt, dass sich hier Schwachstellen bei entsprechenden Feuerschutzrolltoren herausbilden und die Feuerwiderstandsdauer und Wärmedämmfähigkeit dadurch begrenzt sind. Die Dokumente DE2901400 und AT355784 beschreiben Feuerschutzrolltoren des Stands der Technik.

Ausgehend vom vorbeschriebenen Stand der Technik liegt der vorliegenden Erfindung die **Aufgabe** zugrunde, ein Feuerschutzrolltor der gattungsgemäßen Art dahingehend weiterzubilden, dass die Betriebssicherheit verbessert und erhöht wird und insbesondere punktuelle das Tor durchreichende Wärmeübergänge vermieden werden, um die Feuerwiderstandsdauer und die Wärmedämmfähigkeit zu verbessern.

Zur technischen **Lösung** dieser Aufgabe wird ein Feuerschutzrolltor mit den Merkmalen des Patentanspruches 1 vorgeschlagen. Weitere Vorteile und Merkmale ergeben sich aus den Unteransprüchen.

Gemäß der Erfindung ist vorgesehen, dass die bahnförmige Zwischenlage plattenförmige Trägersegmente aufweist, welche beidseitig mit je wenigstens einer Lage aus feuer- und wärmedämmendem Material überdeckt sind. Diese Einfügung von plattenförmigen Trägersegmenten in die Zwischenlage ermöglicht es nun, die Befestigungen sowohl der Profillamellen als auch der Decklamellen unabhängig und variabel zu gestalten.

In vorteilhafter Weise werden die plattenförmigen Trägersegmente als metallische Trägerelemente ausgebildet. Dies können Platten oder auch Profilelemente sein. Gemäß einem fortlaufenden Vorschlag der Erfindung haben die Trägersegmente einen U-förmigen Querschnitt. Geht man davon aus, dass sich die Trägersegmente über die Rolltorpanzer-Breite erstrecken, d.h. sie liegen mit ihrer Längskanten-Ausdehnung quer im Rolltorpanzer, so kann eine obere und gegebenenfalls untere Kante durch eine Abkantung verstärkt sein. Werden beide Längskanten in die gleiche Richtung abgekantet, ergibt sich beispielsweise ein U- oder C- förmiger Querschnitt. Hieraus kann ein Aufnahmeraum oder Aufnahmebereich für Zwischenlagenelemente aus feuer- und wärmedämmendem Material gebildet werden. In der Höhe sind die Trägersegmente an die Höhe der Profillamellen angepasst, was ein entsprechendes Aufrollen fördert.

Erfindungsgemäß sind die Profillamellen mit den Trägersegmenten verbunden. Hierfür werden stiftartigen Verbindungselemente wie Nieten, Schrauben, Bolzen und dergleichen verwendet. Es ergibt sich somit eine Baugruppe aus Trägersegment, Zwischenlagenelement aus feuer- und wärmedämmendem Material und Profillamelle.

Weiterhin werden die Decklamellen ebenfalls mit den Trägersegmenten verbunden. Auch hierfür können stiftartigen Verbindungselemente wie Nieten, Schrauben, Bolzen und dergleichen verwendet werden. Es ergibt sich somit eine Baugruppe aus Trägersegment, Zwischenlagenelement aus feuer- und wärmedämmendem Material und Decklamellen.

Diese als "Baugruppen" bezeichneten Elementgruppen stellen die jeweils eine Hälfte des Gesamtverbundes aus Profillamellen, Zwischenlagenelement aus feuer- und wärmedämmendem Material, Trägersegment, dem weiteren Zwischenlagenelement aus feuer- und wärmedämmendem Material und den Decklamellen. Durch diesen Aufbau ist es nunmehr möglich, die Verbindungselemente zu den Profillamellen einerseits bzw. den Decklamellen andererseits zueinander versetzt anzuordnen, da es eine geradlinige Verbindung ja nur noch von der jeweiligen Lamelle zum Trägersegment gibt. Auf diese Weise sind durchgehende metallische Verbindungen vermieden. Versetzt im Sinne der vorliegenden Erfindung bedeutet in jeglicher Richtung, also horizontal, vertikal, schräg oder in jeder geeigneten Weise, um eine direkte durchgehende Verbindung durch den Rolltorpanzer durch Berührung von Verbindungselementen zu vermeiden.

In einer weiteren gattungsgemäßen Ausführungsform können ein oder mehrere weitere Trägersegmente mit wärmedämmendem Material eingebracht werden. Es ergeben sich somit parallele Zwischenlagen. Dadurch erhöhen sich die Wärmedämmung und die Feuerwiderstandsdauer weiter. Die weiteren Trägersegmente werden in gleicher Weise wie beschrieben versetzt angeordnet mit einem anderen Trägersegment, der Profillamelle oder der Decklamelle verbunden. Auch bei diesen Ausführungsformen sind die Profillamellen und die Decklamellen immer nur mit einem oder mehreren Trägerelementen und in keinem Fall direkt miteinander mittels eines durchgehenden Verbindungselementes verbunden. Somit sind dann mittlere Trägerelemente miteinander verbunden und die Verbindungselemente entsprechend versetzt.

Trägersegmente können an ihren Berührungskanten bzw. an den zueinander benachbarten Längskanten mit Dichtungen versehen sein. Hier eignen sich Elastomere, Gummies, aber auch schnurartige Träger, die mit Mitteln getränkt oder versehen sind, die auf im Brandfall auftretende Temperaturen beispielsweise mit Aufschäumen reagieren. Dadurch wird die Gesamtabdichtungseigenschaft des Rolltorpanzers, beispielsweise gegen Rauchgase, verbessert.

In vorteilhafter Weise können die Decklamellen einseitig oder auch beidseitig mit feuer- und wärmedämmendem Material beschichtet sein. Insbesondere die zum Rolltorpanzer zugewandte Seite der Decklamelle kann mit entsprechendem Material beschichtet sein. Dieses Material kann reine wärmedämmende Eigenschaften aufweisen oder beispielsweise im Brandfall aufschäumen bzw. in Abhängigkeit von der Temperaturentwicklung entsprechende Stoffe freisetzen und dergleichen, sodass im Brandfall durch die aufschäumenden Eigenschaften des Materials eine erhöhte Abdichtung ermöglicht ist.

In gleicher Weise können die Profillamellen beidseitig mit feuer- und wärmedämmendem Material beschichtet sein. Zu diesem Zweck kann beispielsweise entsprechendes Material in kastenförmige Gehäuse eingebracht werden, welche dann auf den Profillamellen angeordnet werden.

Die Zwischenlagen aus feuer- und wärmedämmendem Material können durchgängige Materialbahnen sein oder auch beispielsweise plattenförmige Segmente. Die beidseitig der Trägersegmente angeordneten Zwischenlagen können identisch oder je nach Funktionalität auch unterschiedlich ausgebildet sein. Sie können ebenfalls reine wärmedämmende Eigenschaften aufweisen oder beispielsweise im Brandfall aufschäumen bzw. in Abhängigkeit von der Temperaturentwicklung entsprechende Stoffe freisetzen und dergleichen.

Mit der Erfindung wird ein solide aufgebautes Feuerschutzrolltor bereitgestellt, bei welchem die Feuersicherheit und der Wirkungsgrad erheblich erhöht sind. Insbesondere ist die Feuerwiderstandsdauer deutlich erhöht. Weitere Vorteile und Merkmale der Erfindung ergeben sich aus der folgenden Beschreibung anhand der Figuren. Dabei zeigen:

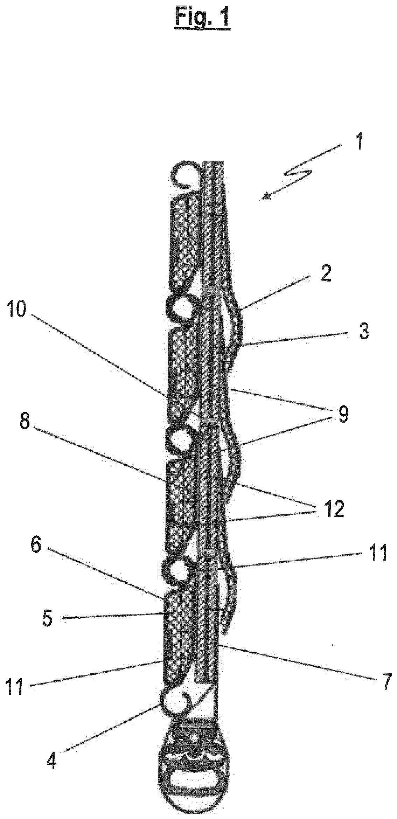

- Fig. 1: ein schematischer Querschnitt durch einen Teil einer Ausführungsform eines Feuerschutzrolltors nach der Erfindung.

Das in Figur 1 gezeigte Feuerschutzrolltor 1 weist einseitig Decklamellen 2 auf, die im gezeigten Ausführungsbeispiel auf der zum Tor weisenden Seite mit feuer- und wärmedämmendem Material 3 beschichtet sind.

Auf der gegenüberliegenden Oberfläche sind Profillamellen 4 angeordnet, die scharnierartig gelenkig miteinander verbunden sind, um ein Rollen bzw. Wickeln zu ermöglichen. Im gezeigten Ausführungsbeispiel sind die Profillamellen 4 auf der vom Tor wegweisenden Seite ebenfalls mit feuer- und wärmedämmendem Material 5 beschichtet, welches im gezeigten Ausführungsbeispiel jeweils in einem kastenförmige Gehäuse 6 eingebracht ist.

In der Mitte sind zwei Zwischenlagen aus feuer- und wärmedämmendem Material 7,8 angeordnet. Zwischen beiden sind plattenförmige Trägerelemente 9 positioniert. Im gezeigten Ausführungsbeispiel sind jeweils Segmente gebildet, die im Wesentlichen der Höhe der Profillamellen entsprechen. Zwischen diesen Segmenten sind Dichtungen 10 angeordnet.

Die Profillamellen sind mit Nieten 11 am Trägerelement 9 befestigt. Für die Befestigung der Decklamellen 2 am Trägerelement 9 sind Nieten 12 eingesetzt. Wie sich zeigt, sind die Nieten 11 und die Nieten 12 zueinander versetzt.

Die Beschreibung des Ausführungsbeispiels dient der Erläuterung und ist nicht beschränkend.

### Bezugszeichenliste

- 1: Feuerschutzrolltor
- 2: Decklamelle
- 3: Feuer- und wärmedämmendes Material
- 4: Profillamelle
- 5: Feuer- und wärmedämmendes Material
- 6: Gehäuse
- 7: Feuer- und wärmedämmendes Material
- 8: Feuer- und wärmedämmendes Material
- 9: Trägersegment
- 10: Dichtung
- 11: Nieten
- 12: Nieten

## Patentansprüche

1. Feuerschutzrolltor aus einem Rolltorpanzer aus gelenkig miteinander verbundenen Profillamellen (4), einer bahnförmigen Zwischenlage aus feuer- und wärmedämmendem Material und sich überlappenden Decklamellen (2), der in beidseitigen Führungsschienen führbar im Öffnungszustand oberhalb einer im Brandfall zu verschließenden Öffnung gehalten ist, **dadurch gekennzeichnet, dass** die bahnförmige Zwischenlage plattenförmige Trägersegmente (9) aufweist, welche beidseitig mit je wenigstens einer Lage aus feuer- und wärmedämmendem Material (7, 8) überdeckt sind, wobei die plattenförmigen Trägersegmente (9) mittels erster Verbindungselemente (11) mit den Profillamellen (4) und mittels zweiter Verbindungselemente (12) mit den Decklamellen (2) verbunden sind, wobei die ersten und zweiten Verbindungselemente (11, 12) stiftförmig sind und wobei die ersten und zweiten Verbindungselemente (11, 12) zueinander versetzt sind.

2. Feuerschutzrolltor nach Anspruch 1, wobei die plattenförmigen Trägersegmente (9) aus Metall gebildet sind.

3. Feuerschutzrolltor nach einem der vorhergehenden Ansprüche, wobei sich die plattenförmigen Trägersegmente (9) im Wesentlichen über die Breite des Rolltorpanzers erstrecken.

4. Feuerschutzrolltor nach einem der vorhergehenden Ansprüche, wobei die plattenförmigen Trägersegmente (9) in der Höhe an die Ausdehnung der Profillamellen (4) angepasst sind.

5. Feuerschutzrolltor nach einem der vorhergehenden Ansprüche, wobei zwischen zueinander weisenden Kanten benachbarter plattenförmiger Trägersegmente (9) Dichtungselemente (10) angeordnet sind.

6. Feuerschutzrolltor nach einem der vorhergehenden Ansprüche, wobei die plattenförmigen Trägersegmente (5) einen U-Querschnitt aufweisen.

7. Feuerschutzrolltor nach einem der vorhergehenden Ansprüche, wobei die Decklamellen (2) wenigstens einseitig mit feuer- und wärmedämmendem Material (3) beschichtet sind.

8. Feuerschutzrolltor nach einem der vorhergehenden Ansprüche, wobei auf die Profillamellen (4) eine Schicht aus feuer- und wärmedämmendem Material (5) aufgelegt ist.

9. Feuerschutzrolltor nach Anspruch 8, wobei die auf die Profillamellen (4) aufgesetzte Schicht aus feuer- und wärmedämmendem Material in einem Kastengehäuse (6) angeordnet ist.

10. Feuerschutzrolltor nach einem der vorhergehenden Ansprüche, wobei mehrere plattenförmige Trägersegmente (9), welche beidseitig mit je wenigstens einer Lage aus feuer- und wärmedämmendem Material (7, 8) überdeckt sind, parallel angeordnet sind.

## Claims

1. Fire-protection rolling door, comprising a rolling door curtain made of profiled slats (4) connected to one another in an articulated manner, a web-shaped intermediate layer made of fire- and heat-insulating material and overlapping cover slats (2), which is held in guide rails on both sides in a guidable manner in the open state above an opening to be closed in the event of fire, **characterized in that** the web-shaped intermediate layer has plate-shaped support segments (9) which are respectively covered on both sides by at least one layer made of fire- and heat-insulating material (7, 8), the plate-shaped support segments (9) being covered by means of first connecting elements (11), which are each covered on both sides with at least one layer of fire- and heat-insulating material (7, 8), the plate-shaped support segments (9) being connected to the profiled slats (4) by means of first connecting elements (11) and to the cover slats (2) by means of second connecting elements (12), the first and second connecting elements (11, 12) being pin-shaped and the first and second connecting elements (11, 12) being offset with respect to one another.

2. Fire-protection rolling door according to claim 1, wherein the plate-shaped support segments (9) are formed of metal.

3. Fire-protection rolling door according to any one of the preceding claims, wherein the plate-shaped support segments (9) extend substantially over the width of the rolling door curtain.

4. Fire-protection rolling door according to any one of the preceding claims, wherein the plate-shaped carrier segments (9) are adapted in height to the extent of the profiled slats (4).

5. Fire-protection rolling door according to any one of the preceding claims, wherein sealing elements (10) are arranged between mutually facing edges of adjacent plate-shaped support segments (9).

6. Fire-protection rolling door according to any one of the preceding claims, wherein the plate-shaped support segments (5) have a U-shaped crosssection.

7. Fire-protection rolling door according to any one of the preceding claims, wherein the cover slats (2) are coated on at least one side with fire- and heat-insulating material (3).

8. Fire-protection rolling door according to any one of the preceding claims, wherein a layer of fire- and heat-insulating material (5) is applied to the profiled slats (4).

9. Fire-protection rolling door according to claim 8, wherein the layer of fireand heat-insulating material placed on the profiled slats (4) is arranged in a box housing (6).

10. Fire-protection rolling door according to any one of the preceding claims, wherein several plate-shaped support segments (9), which are each covered on both sides with at least one layer of a fire- and heat-insulating material (7, 8), are arranged in parallel.

## Revendications

1. Porte enroulable de protection contre l'incendie composée d'un tablier de porte roulante constitué de lamelles profilées (4) reliées entre elles de manière articulée, d'une couche intermédiaire en forme de bande en matériau isolant du feu et de la chaleur et de lamelles de recouvrement (2) se chevauchant, qui est maintenue dans des rails de guidage des deux côtés de manière à pouvoir être guidée à l'état ouvert au-dessus d'une ouverture à fermer en cas d'incendie, **caractérisée en ce que** la couche intermédiaire en forme de bande présente des segments de support (9) en forme de plaque, qui sont recouverts des deux côtés chacun d'au moins une couche de matériau (7, 8) isolant du feu et de la chaleur, les segments de support (9) en forme de plaque étant reliés aux lamelles profilées (4) au moyen de premiers éléments de liaison (11) et aux lamelles de recouvrement (2) au moyen de deuxièmes éléments de liaison (12), les premiers et deuxièmes éléments de liaison (11, 12) étant en forme de tige et les premiers et deuxièmes éléments de liaison (11, 12) étant décalés les uns par rapport aux autres.

2. Porte enroulable de protection contre l'incendie selon la revendication 1, dans laquelle des segments de support (9) en forme de plaque sont formés en métal.

3. Porte enroulable de protection contre l'incendie selon l'une des revendications précédentes, dans laquelle les segments de support (9) en forme de plaque s'étendent essentiellement sur la largeur du tablier de la porte roulante.

4. Porte enroulable de protection contre l'incendie selon l'une des revendications précédentes, dans laquelle les segments de support (9) en forme de plaque sont adaptés en hauteur à l'extension des lamelles profilées (4).

5. Porte enroulable de protection contre l'incendie selon l'une des revendications précédentes, des éléments d'étanchéité (10) étant disposés entre les bords orientés les uns vers les autres de segments de support (9) voisins en forme de plaques.

6. Porte enroulable de protection contre l'incendie selon l'une des revendications précédentes, dans laquelle les segments de support (5) en forme de plaque présentent une section transversale en U.

7. Porte enroulable de protection contre l'incendie selon l'une des revendications précédentes, dans laquelle les lamelles de recouvrement (2) sont revêtues au moins d'un côté d'un matériau (3) isolant du feu et de la chaleur.

8. Porte enroulable de protection contre l'incendie selon l'une des revendications précédentes, une couche de matériau (5) isolant du feu et de la chaleur étant posée sur les lamelles profilées (4).

9. Porte enroulable de protection contre l'incendie selon la revendication 8, dans laquelle la couche de matériau isolant du feu et de la chaleur posée sur les lamelles profilées (4) est disposée dans un boîtier (6).

10. Porte enroulable de protection contre l'incendie selon l'une des revendications précédentes, dans laquelle plusieurs segments de support (9) en forme de plaques, recouverts chacun des deux côtés d'au moins une couche d'un matériau (7, 8) isolant du feu et de la chaleur, sont disposés parallèlement.
